# FASCICULE DE BREVET EUROPEEN

(11) **EP 1 482 277 B1**
(45) Date de publication et mention de la délivrance du brevet: **03.10.2012**
(21) Numéro de dépôt: 04291180.0
(22) Date de dépôt: 07.05.2004
(51) Int. Cl.: G01C 21/00, G01C 23/00, G09G 5/00

(54) **Dispositif et système d'affichage de secours d'un aéronef**
Vorrichtung und Verfahren zur Rettungsanzeigung in einem Flugzeug
Device and system for emergency display in an aircraft

(30) Priorité: 19.05.2003 FR 0305951
(43) Date de publication de la demande: 01.12.2004
(73) Titulaire: AIRBUS OPERATIONS (SAS), 31060 Toulouse (FR)
(72) Inventeur: Saint Aroman, Stéphane, 31200 Toulouse (FR); Plat, Marielle, 81370 Saint Sulpice la Pointe (FR); Rouquette, Patrice, 12740 La Loubiere (FR)
(74) Mandataire: Hauer, Bernard

(56) Documents cités:
- US-A- 4 598 292
- US-A- 5 978 715
- US-A1- 2003 030 911

## Description

La présente invention concerne un dispositif et un système d'affichage de secours d'un aéronef, en particulier d'un avion de transport civil.

Un tel dispositif d'affichage de secours doit permettre de calculer et d'afficher dans le poste de pilotage de l'aéronef des informations minimales (vitesse, altitude, attitude, informations de navigation, ...) qui sont représentatives du vol de l'aéronef, en cas de panne d'un dispositif d'affichage principal de l'aéronef, en particulier un écran de navigation de type "ND" ("Navigation Display") ou un écran primaire de pilotage de type "PFD" ("Primary Flight Display"), ou en cas de panne d'un système [ADIRS ("Air Data and Inertial Reference System"), FMS ("Flight Management System"), ...] élaborant des informations habituellement affichées sur lesdits dispositifs d'affichage principal de l'aéronef (ND, PFD, ...).

On connaît un premier dispositif d'affichage de secours du type "ISIS" ("Integrated Standby Instrument System"), qui affiche des informations d'altitude, de vitesse et d'attitude de l'aéronef sur un écran, dont l'interface homme/machine ressemble à celle de l'écran PFD. Le document FR-2 784 457 est relatif à un tel premier dispositif d'affichage de secours.

On connaît également un second dispositif d'affichage de secours du type "DDRMI" ("Digital Distance and Radio Magnetic Indicator") qui affiche des informations de navigation, telles que le cap de l'aéronef, ainsi que sa position par rapport à des balises usuelles, par exemple de type "VOR" ("VHF Omnidirectional Range") ou de type "DME" ("Distance Measuring Equipment").

Ces deux dispositifs d'affichage de secours ISIS et DORMI affichent donc des informations très différentes.

Toutefois, même lorsqu'un aéronef comporte simultanément ces deux dispositifs ISIS et DDRMI, il subsiste des inconvénients importants dans l'affichage de secours. En effet, dès lors que le dispositif ISIS est en panne ou n'est pas disponible, l'aéronef ne peut pas décoller pour des raisons de sécurité, puisque l'affichage de certaines informations ne serait alors pas garanti en cas de panne des dispositifs d'affichage principaux (PDF, ND, ...) pendant le vol.

Par ailleurs, le fonctionnement du dispositif DDRMI est basé sur la réception d'informations provenant de balises VOR, DME, ... Or, il n'existe pas de telles balises dans des zones désertiques ou océaniques et, dans de telles situations, le dispositif DDRMI ne peut afficher que le cap, mais pas la position de l'aéronef par rapport à ces balises, puisque ces dernières n'existent pas dans les zones considérées. De plus, ces balises sont basées sur des technologies relativement anciennes et risquent à moyen terme de ne plus être implantées au sol sur les territoires susceptibles d'être survolés par l'aéronef.

Par ailleurs, on connaît :
- par le document US-4 598 292, un dispositif d'affichage de secours permettant d'afficher des paramètres essentiels d'attitude et de navigation dans le cas d'une panne d'un affichage primaire. Ce dispositif est destiné à afficher le taux de rotation, l'altitude, la vitesse, le roulis, le tangage et le cap de l'aéronef ; et
- par le document US-5 978 715, un procédé et un dispositif de contrôle et d'affichage d'un aéronef, comprenant notamment un afficheur de paramètres primaires de vol.

La présente invention a pour objet un dispositif d'affichage de secours qui permet de remédier aux inconvénients précités.

A cet effet, selon l'invention, ledit dispositif d'affichage de secours comportant :
- un ensemble de sources d'informations ;
- une unité de traitement d'informations susceptible de traiter des informations issues dudit ensemble de sources d'informations ; et
- un moyen d'affichage susceptible de présenter sur au moins un écran de visualisation des informations traitées issues de ladite unité de traitement d'informations, à savoir des informations de pilotage et au moins une information de navigation,
est remarquable en ce qu'il comporte, de plus, un moyen de configuration permettant à un opérateur de configurer ledit dispositif d'affichage de secours, selon l'un des trois états de configuration suivants :
- un premier état de configuration, pour lequel ledit moyen d'affichage présente sur l'écran de visualisation des informations de pilotage de l'aéronef ;
- un deuxième état de configuration, pour lequel ledit moyen d'affichage présente sur l'écran de visualisation des informations de navigation de l'aéronef comprenant des indications de position; et
- un troisième état de configuration, pour lequel ledit moyen d'affichage présente sur l'écran de visualisation à la fois des informations de pilotage et des informations de navigation comprenant des indications de postion.

Ainsi, grâce à l'invention, ledit dispositif d'affichage de secours peut calculer et afficher toutes les informations essentielles, qui sont représentatives du vol d'un aéronef, c'est-à-dire aussi bien lesdites informations de pilotage (vitesse, altitude, attitude, ...) que lesdites informations de navigation. De plus, ces informations de pilotage et de navigation peuvent être affichées :
- soit séparément (premier et second états de configuration), le dispositif d'affichage de secours conforme à l'invention pouvant alors suppléer au moins un écran de navigation ou au moins un écran de pilotage, défaillant ;
- soit simultanément (troisième état de configuration), le dispositif d'affichage de secours conforme à l'invention pouvant alors suppléer simultanément au moins un écran de navigation et/ou au moins un écran de pilotage, ainsi qu'un second dispositif d'affichage de secours conforme à l'invention, qui sont tous défaillants.

Le dispositif d'affichage de secours conforme à l'invention peut donc remplacer efficacement lesdits dispositifs ISIS et DDRMI usuels et, ainsi, remédier aux inconvénients précités.

En outre, avantageusement, ledit ensemble de sources d'informations comporte des sources, qui sont montées sur l'aéronef et qui fournissent des indications de position, et les indications de position fournies par ces sources font parties desdites informations de navigation. Ainsi, le dispositif d'affichage de secours conforme à l'invention n'est pas tributaire, notamment, de balises situées au sol.

Par ailleurs, avantageusement, lorsque ledit dispositif d'affichage de secours est configuré dans l'un desdits deuxièmes et troisièmes états de configuration permettant de présenter des informations de navigation :
- ladite unité de traitement d'informations détermine la route théorique que doit suivre l'aéronef, ainsi que la déviation entre la position effective de l'aéronef et ladite route théorique ; et
- ledit moyen d'affichage présente sur ledit écran de visualisation ladite route théorique et ladite déviation.

Ceci présente l'avantage, par rapport à un dispositif DDRMI par exemple, d'une homogénéité d'affichage avec l'écran ND (que le dispositif d'affichage de secours conforme à l'invention remplace en cas de panne dudit écran ND) et donc d'une ergonomie adaptée à ce type de situation d'urgence.

Par ailleurs, de façon avantageuse, le dispositif d'affichage de secours conforme à l'invention comporte, de plus, un moyen de saisie permettant à un opérateur d'entrer des données dans ledit dispositif d'affichage de secours et, lorsque ledit dispositif d'affichage de secours est configuré dans l'un desdits deuxièmes et troisièmes états de configuration permettant de présenter des informations de navigation :
- ledit moyen de saisie permet (au pilote par exemple) d'entrer des points de route ; et
- ledit moyen d'affichage présente sur ledit écran de visualisation les points de route ainsi entrés.

En outre, avantageusement, ledit ensemble de sources d'informations comporte un dispositif apte à fournir une information de position horizontale de l'aéronef, et, lorsque ledit dispositif d'affichage de secours est configuré dans l'un desdits deuxièmes et troisièmes états de configuration permettant de présenter des informations de navigation, ledit moyen d'affichage présente sur ledit écran de visualisation ladite position horizontale de l'aéronef.

Par ailleurs, dans un mode de réalisation particulier, lorsque ledit dispositif d'affichage de secours est configuré dans l'un desdits deuxièmes et troisièmes états de configuration permettant de présenter des informations de navigation :
- ladite unité de traitement d'informations détermine une indication de direction vers un point géographique prédéterminé en latitude et en longitude ; et
- ledit moyen d'affichage présente sur ledit écran de visualisation ladite indication de direction.

Un tel affichage permet de simuler un relèvement VOR et, par conséquent, de conserver une fonctionnalité que certains pilotes ont l'habitude d'utiliser sur un dispositif DDRMI.

La présente invention concerne également un système d'affichage de secours d'un aéronef.

Selon l'invention, ledit système d'affichage de secours est remarquable en ce qu'il comporte au moins deux dispositifs d'affichage de secours du type précité. De préférence, lesdits deux dispositifs d'affichage de secours sont en tous points identiques.

L'utilisation dans le poste de pilotage desdits deux dispositifs d'affichage de secours, un premier paramétré pour afficher des informations de pilotage relatives à la vitesse, l'altitude et l'attitude de l'aéronef (comme un dispositif ISIS par exemple) et un second pour afficher des informations de navigation (comme un dispositif DDRMI par exemple), permet à l'aéronef de décoller même en cas de panne de l'un desdits deux dispositifs d'affichage de secours, car le pilote peut alors reconfigurer celui des deux dispositifs d'affichage de secours qui n'est pas en panne pour accéder à l'ensemble des informations concernant le vol de cet aéronef : affichage combiné des deux types d'informations (troisième état de configuration). Il en résulte une diminution des coûts d'exploitation de l'aéronef. Il en résulte également une amélioration de la sécurité du vol et de la disponibilité de l'aéronef, puisqu'en cas de panne en vol d'un desdits deux dispositifs d'affichage de secours, toutes ses fonctionnalités sont disponibles sur l'autre dispositif d'affichage de secours alors qu'avec les dispositifs usuels précités, en cas de panne du dispositif ISIS ou du dispositif DORMI par exemple, les fonctionnalités correspondant au dispositif en panne sont perdues.

Un autre avantage du système d'affichage de secours conforme à l'invention réside dans le fait que, malgré les fonctionnalités de redondance qu'ils apportent, les deux dispositifs d'affichage de secours offrent un encombrement dans le poste de pilotage qui est sensiblement analogue à l'encombrement des dispositifs usuels qu'ils remplacent, par exemple les dispositifs ISIS et DORMI. De plus, le fait que lesdits deux dispositifs d'affichage de secours soient identiques permet de réduire le nombre de pièces de rechange.

Par ailleurs, dans un mode de réalisation particulier, les deux ensembles de sources d'informations desdits deux dispositifs d'affichage de secours font partie d'une seule et même unité d'informations et les deux unités de traitement d'informations desdits deux dispositifs d'affichage de secours font partie d'une seule et même unité centrale.

La présente invention concerne également un système d'affichage d'un aéronef, qui comporte au moins un dispositif d'affichage principal, par exemple un dispositif de type ND ou PFD.

Selon l'invention, ledit système d'affichage est remarquable en ce qu'il comporte, de plus, un système d'affichage de secours tel que celui précité.

Dans un mode de réalisation préféré, ledit dispositif d'affichage principal (ND ou PFD par exemple) comporte des sources d'informations, et lesdits deux ensembles de sources d'informations desdits deux dispositifs d'affichage de secours (dudit système d'affichage de secours) sont distincts desdites sources d'informations dudit dispositif d'affichage principal. Ceci permet d'augmenter la sûreté de fonctionnement dudit système d'affichage.

Les figures du dessin annexé feront bien comprendre comment l'invention peut être réalisée. Sur ces figures, des références identiques désignent des éléments semblables.

La figure 1 est le schéma synoptique d'un dispositif d'affichage de secours conforme à l'invention.

La figure 2 est le schéma synoptique d'un système d'affichage de secours conforme à l'invention.

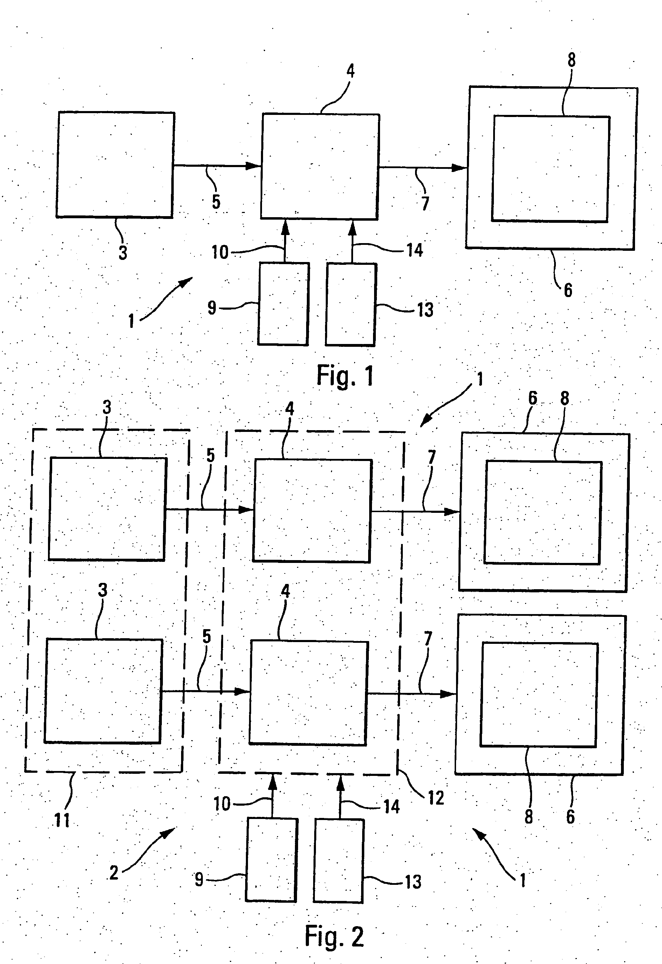

Le dispositif 1 conforme à l'invention est un dispositif d'affichage de secours d'un aéronef, en particulier d'un avion de transport civil, et est destiné à suppléer un dispositif d'affichage principal usuel, notamment un dispositif PFD ou un dispositif ND, en cas de panne de ce dernier. A cet effet, ledit dispositif 1 peut faire partie d'un système d'affichage de secours 2 représenté sur la figure 2 et précisé ci-dessous.

Ledit dispositif d'affichage de secours 1, qui est embarqué sur l'aéronef, est du type comportant :
- un ensemble 3 de sources d'informations ;
- une unité de traitement d'informations 4 qui est reliée par une liaison 5 audit ensemble 3 de sources d'informations et qui est susceptible de traiter des informations issues dudit ensemble 3 de sources d'informations ; et
- un moyen d'affichage 6 qui est relié par une liaison 7 à ladite unité de traitement d'informations 4 et qui est susceptible de présenter, sur au moins un écran de visualisation 8 usuel, des informations traitées issues de ladite unité de traitement d'informations 4.

Selon l'invention, ledit dispositif 1 comporte, de plus, un moyen de configuration 9 qui permet à un opérateur (notamment un pilote de l'aéronef) de configurer ledit dispositif d'affichage de secours 1, selon l'un des trois états de configuration (d'affichage) suivants :
- un premier état de configuration, pour lequel ledit moyen d'affichage 6 présente sur l'écran de visualisation 8 des informations de pilotage usuelles, relatives notamment à la vitesse, l'altitude et l'attitude de l'aéronef ;
- un deuxième état de configuration, pour lequel ledit moyen d'affichage 6 présente sur l'écran de visualisation 8 des informations de navigation usuelles de l'aéronef ; et
- un troisième état de configuration, pour lequel ledit moyen d'affichage 6 présente sur l'écran de visualisation 8 à la fois des informations de pilotage et des informations de navigation.

Ainsi, grâce à l'invention, ledit dispositif d'affichage de secours 1 peut calculer et afficher toutes les informations essentielles au vol de l'aéronef, c'est-à-dire aussi bien des informations de pilotage (vitesse, altitude, attitude, ...) que des informations de navigation. De plus, lesdites informations de pilotage et de navigation peuvent être affichées, soit séparément (premier ou deuxième état de configuration), soit simultanément (troisième état de configuration).

Le dispositif d'affichage de secours 1 conforme à l'invention peut donc remplacer efficacement des dispositifs ISIS et DDRMI usuels précités.

De préférence, ledit moyen de configuration 9 correspond à un moyen d'actionnement, par exemple un bouton, sur lequel une action du pilote permet de basculer d'un affichage à un autre, c'est-à-dire d'un état de configuration à un autre.

Selon l'invention, comme représenté sur la figure 2, ledit système d'affichage de secours 2 comporte deux dispositifs d'affichage de secours 1 du type précité. De préférence, lesdits deux dispositifs d'affichage de secours 1 sont en tous points identiques.

L'utilisation dans le poste de pilotage desdits deux dispositifs 1, dont un premier est par exemple paramétré pour afficher des informations de pilotage relatives notamment à la vitesse, l'altitude et l'attitude de l'aéronef (tel qu'un dispositif ISIS) et dont le second est paramétré pour afficher des informations de navigation (tel qu'un dispositif DORMI), permet à l'aéronef de décoller même en cas de panne de l'un desdits deux dispositifs 1, car le pilote peut alors reconfigurer celui des deux dispositifs 1 qui n'est pas en panne pour accéder à l'ensemble des informations concernant le vol de cet aéronef : affichage combiné des deux types d'informations (troisième état de configuration). Il en résulte une diminution des coûts d'exploitation de l'aéronef par la compagnie. Il en résulte aussi une amélioration de la sécurité du vol et de la disponibilité de l'aéronef, puisqu'en cas de panne en vol d'un desdits deux dispositifs 1, toutes ses fonctionnalités sont disponibles sur l'autre alors qu'avec les dispositifs ISIS et DORMI usuels précités, en cas de panne du dispositif ISIS ou du dispositif DDRMI, les fonctionnalités correspondant au dispositif en panne sont perdues.

Un autre avantage de l'invention réside dans le fait que, malgré les, fonctionnalités de redondance qu'ils apportent, ces deux dispositifs d'affichage de secours 1 offrent un encombrement dans le poste de pilotage, qui est sensiblement analogue à l'encombrement des dispositifs usuels qu'ils remplacent, par exemple des dispositifs ISIS et DORMI.

De plus, le fait que lesdits deux dispositifs d'affichage de secours 1 soient identiques permet de réduire le nombre de pièces de rechange.

Dans le mode de réalisation particulier représenté sur la figure 2, les deux ensembles 3 de sources d'informations desdits deux dispositifs 1 font partie d'une seule unité d'informations 11 et les deux unités de traitement d'informations 4 desdits deux dispositifs 1 font partie d'une seule unité centrale 12.

Dans un mode de réalisation particulier, ledit ensemble 3 de sources d'informations comporte des sources usuelles (par exemple IRS, GPIRS, GPS,...) qui sont montées sur l'aéronef et qui fournissent des indications de position, les indications de position fournies par ces sources faisant partie desdites informations de navigation. Ainsi, l'affichage des informations de navigation est basé sur des informations fournies par des sources internes d'indication de position existant déjà sur l'aéronef (par exemple IRS, GPIRS, GPS), plutôt que sur des informations issues de balises externes (VOR, DME, ...). Cela est avantageux car le dispositif 1 conforme à l'invention peut alors afficher des indications de position de l'aéronef, même si celui-ci survole des zones non équipées de telles balises externes.

Par ailleurs, avantageusement, lorsque ledit dispositif 1 est configuré dans l'un desdits deuxièmes et troisièmes états de configuration permettant de présenter des informations de navigation :
- ladite unité de traitement d'informations 4 détermine la route théorique que doit suivre l'aéronef, ainsi que la déviation entre la position effective de l'aéronef et ladite route théorique ; et
- ledit moyen d'affichage 6 présente sur ledit écran de visualisation 8 ladite route théorique et ladite déviation.

Ceci présente l'avantage, contrairement au dispositif DORMI, d'une homogénéité d'affichage avec l'écran ND (que le dispositif d'affichage de secours 1 conforme à l'invention remplace en cas de panne dudit écran ND) et donc d'une ergonomie adaptée à ce type de situation d'urgence.

En effet, le but du système d'affichage de secours 2 conforme à l'invention est de suppléer les instruments de vol habituels, qui deviennent indisponibles. On sait que les instruments de secours usuels (hormis le dispositif ISIS) sont éloignés de la représentation d'informations dispensée sur des écrans primaires (écran ND par exemple) et demandent, de ce fait, aux pilotes une adaptation, généralement lors de situations de vol qui sont stressantes. Sachant, par ailleurs, que les entraînements aux situations de vol manuel avec utilisation d'instruments de secours sont de moins en moins fréquents lors de la formation continue des pilotes, lorsque ceux-ci sont confrontés à une telle situation dans la réalité, ils doivent alors utiliser des instruments auxquels ils ne sont pas habitués et leur charge de travail augmente considérablement, ainsi que leur stress. La nouvelle interface conforme à l'invention (dispositif 1 ou système 2) ressemblant aux interfaces déjà utilisées pour les instruments principaux, permet notamment d'aider à la navigation en reprenant les principes généraux indispensables à la gestion d'une navigation et en présentant au pilote une représentation similaire à celle qu'il aurait dû reconstruire mentalement. Cette interface permet donc d'alléger la charge de travail en situation de crise et apporte une meilleure maîtrise de la situation pour les pilotes.

Dans un mode de réalisation particulier, le dispositif d'affichage de secours 1 comporte, de plus, un moyen de saisie 13 qui est relié par une liaison 14 à l'unité 4 et qui permet à un opérateur (un pilote de l'aéronef par exemple) d'entrer des données dans ledit dispositif d'affichage de secours 1 et, lorsque ledit dispositif 1 est configuré dans l'un desdits deuxièmes et troisièmes états de configuration permettant de présenter des informations de navigation :
- ledit moyen de saisie 13 permet à l'opérateur d'entrer un nombre (limité) de points de route d'un plan de vol ; et
- ledit moyen d'affichage 6 présente sur ledit écran de visualisation 8 les points de route ainsi entrés.

A titre d'exemple, le nombre (limité) de points de route peut être égal à 10. Ce nombre est évalué comme suffisant pour entrer les points de route tournants, contenus dans une approche moyenne, sans avoir à manipuler à nouveau l'interface. Ceci présente donc l'avantage de ne pas augmenter inutilement la charge de travail du pilote dans une phase de vol où cette charge de travail est déjà élevée. Cette fonctionnalité nouvelle par rapport à un dispositif DORMI permet de suppléer une panne d'un système de gestion de vol, que ce soit au niveau de l'affichage ou de la disponibilité des données, en fournissant une visualisation intuitive des informations de guidage horizontal.

Dans un mode préféré de réalisation correspondant au cas où le dispositif d'affichage de secours 1 est configuré dans le deuxième état de configuration (affichage d'informations de navigation), lorsque au cours du vol de l'aéronef, celui-ci passe au voisinage d'un point de route ("waypoint" en anglais) du plan de vol, ledit dispositif d'affichage de secours 1 modifie automatiquement (sans requête du pilote) son affichage de façon à ce que ledit moyen d'affichage 6 présente sur ledit écran de visualisation 8 des informations relatives au segment dudit plan de vol compris entre ledit point de route au voisinage duquel passe l'aéronef et le prochain point de route de ce plan de vol au voisinage duquel est censé passer l'aéronef. Ce mode de réalisation est avantageux en ce qu'il permet un affichage intuitif d'informations de guidage horizontal et un déroulement automatique des segments du plan de vol au fur et à mesure du vol de l'aéronef.

Dans un mode de réalisation particulier, ledit ensemble 3 de sources d'informations comporte un dispositif apte à fournir une information de position horizontale (par exemple latitude/longitude) de l'aéronef [par exemple un dispositif GPS ("Global Positioning System") de positionnement par satellites, un dispositif IRS ("Inertial Reference System"), un dispositif GPIRS ("Global Positioning/Inertial Reference System"), ...], et, lorsque ledit dispositif 1 est configuré dans l'un desdits deuxièmes et troisièmes états de configuration permettant de présenter des informations de navigation, ledit moyen d'affichage 6 présente sur ledit écran de visualisation 8 ladite position horizontale de l'aéronef.

Lorsque l'on combine les différents modes de réalisation précédents de l'invention, le système d'affichage de secours 2 permet de suppléer aux pannes de dispositifs d'affichage primaire (PFD, ND) et de gestion de vol (FMS), et même aux pannes de dispositifs ADIRS ("Air Data Inertial Référence System") puisque, dans ce dernier cas, le système 2 permet d'afficher la position horizontale (par exemple latitude/longitude) de l'aéronef à partir d'informations fournies par un dispositif apte à fournir une information de position horizontale (dispositif GPS, ...), comme indiqué ci-dessus. Ce système 2 permet donc au pilote d'amener l'aéronef à destination, dans les cas considérés, avec un mode de fonctionnement le plus proche possible de celui correspondant au fonctionnement normal des dispositifs d'affichage primaire, ce qui permet d'améliorer l'ergonomie du poste de pilotage pour une meilleure adaptation aux situations de crise.

Par ailleurs, dans un mode de réalisation particulier, lorsque ledit dispositif d'affichage de secours 1 est configuré dans l'un desdits deuxièmes et troisièmes états de configuration permettant de présenter des informations de navigation :
- ladite unité de traitement d'informations 4 détermine une indication de direction vers un point géographique prédéterminé en latitude et en longitude ; et
- ledit moyen d'affichage 6 présente sur ledit écran de visualisation 8 ladite indication de direction.

Un tel affichage permet de simuler un relèvement VOR et, par conséquent, de conserver une fonctionnalité que certains pilotes ont l'habitude d'utiliser sur un dispositif DORMI.

La présente invention concerne également un système d'affichage (non représenté) d'un aéronef qui comporte au moins un dispositif d'affichage principal usuel, par exemple un dispositif de type ND ou PFD.

Selon l'invention, ledit système d'affichage est remarquable en ce qu'il comporte, de plus, un système d'affichage de secours 2 tel que celui décrit précédemment.

Dans un mode de réalisation préféré, ledit dispositif d'affichage principal comporte des sources d'informations, et lesdits deux ensembles 3 de sources d'informations desdits deux dispositifs d'affichage de secours 1 (dudit système d'affichage de secours 2) sont distincts desdites sources d'informations dudit dispositif d'affichage principal. Ceci permet d'augmenter la sûreté de fonctionnement dudit système d'affichage conforme à l'invention.

## Revendications

1. Dispositif d'affichage de secours d'un aéronef, ledit dispositif d'affichage de secours (1) comportant :
- un ensemble (3) de sources d'informations ;
- une unité de traitement d'informations (4) susceptible de traiter des informations issues dudit ensemble (3) de sources d'informations ; et
- un moyen d'affichage (6) susceptible de présenter sur au moins un écran de visualisation (8) des informations traitées issues de ladite unité de traitement d'informations (4), à savoir des informations de pilotage et au moins une information de navigation,
**caractérisé en ce qu'**il comporte, de plus, un moyen de configuration (9) permettant à un opérateur de configurer ledit dispositif d'affichage de secours (1), selon l'un des trois états de configuration suivants :
- un premier état de configuration, pour lequel ledit moyen d'affichage (6) présente sur l'écran de visualisation (8) des informations de pilotage de l'aéronef ;
- un deuxième état de configuration, pour lequel ledit moyen d'affichage (6) présente sur l'écran de visualisation (8) des informations de navigation de l'aéronef comprenant des indications de position ; et
- un troisième état de configuration, pour lequel ledit moyen d'affichage (6) présente sur l'écran de visualisation (8) à la fois des informations de pilotage et des informations de navigation comprenant des indications de position.

2. Dispositif selon la revendication 1,
**caractérisé en ce que** ledit ensemble (3) de sources d'informations comporte des sources, qui sont montées sur l'aéronef et qui fournissent des indications de position.

3. Dispositif selon l'une des revendications 1 et 2,
**caractérisé en ce que**, lorsque ledit dispositif d'affichage de secours (1) est configuré dans l'un desdits deuxièmes et troisièmes états de configuration permettant de présenter des informations de navigation :
- ladite unité de traitement d'informations (4) détermine la route théorique que doit suivre l'aéronef, ainsi que la déviation entre la position effective de l'aéronef et ladite route théorique ; et
- ledit moyen d'affichage (6) présente sur ledit écran de visualisation (8) ladite route théorique et ladite déviation.

4. Dispositif selon l'une quelconque des revendications 1 à 3,
**caractérisé en ce qu'**il comporte, de plus, un moyen de saisie (13) permettant à un opérateur d'entrer des données dans ledit dispositif d'affichage de secours (1) et **en ce que**, lorsque ledit dispositif d'affichage de secours (1) est configuré dans l'un desdits deuxièmes et troisièmes états de configuration permettant de présenter des informations de navigation :
- ledit moyen de saisie (13) permet d'entrer des points de route ; et
- ledit moyen d'affichage (6) présente sur ledit écran de visualisation (8) les points de route ainsi entrés.

5. Dispositif selon l'une quelconque des revendications précédentes,
**caractérisé en ce que** ledit ensemble (3) de sources d'informations comporte un dispositif apte à fournir une information de position horizontale de l'aéronef, et **en ce que**, lorsque ledit dispositif d'affichage de secours (1) est configuré dans l'un desdits deuxièmes et troisièmes états de configuration permettant de présenter des informations de navigation, ledit moyen d'affichage (6) présente sur ledit écran de visualisation (8) ladite position horizontale de l'aéronef.

6. Dispositif selon l'une quelconque des revendications précédentes,
**caractérisé en ce que**, lorsque ledit dispositif d'affichage de secours (1) est configuré dans l'un desdits deuxièmes et troisièmes états de configuration permettant de présenter des informations de navigation :
- ladite unité de traitement d'informations (4) détermine une indication de direction vers un point géographique prédéterminé en latitude et en longitude ; et
- ledit moyen d'affichage (6) présente sur ledit écran de visualisation (8) ladite indication de direction.

7. Système d'affichage de secours d'un aéronef,
**caractérisé en ce qu'**il comporte au moins deux dispositifs d'affichage de secours (1) du type de celui spécifié sous l'une quelconque des revendications 1 à 6, et **en ce que** l'un est paramétré pour afficher des informations de pilotage et l'autre est paramétré pour afficher des informations de navigation.

8. Système selon la revendication 7,
**caractérisé en ce que** lesdits deux dispositifs d'affichage de secours (1) sont identiques.

9. Système selon l'une des revendications 7 et 8,
**caractérisé en ce que** les deux ensembles (3) de sources d'informations desdits deux dispositifs d'affichage de secours (1) font partie d'une seule et même unité d'informations (11) et **en ce que** les deux unités de traitement d'informations (4) desdits deux dispositifs d'affichage de secours (1) font partie d'une seule et même unité centrale (1 2).

10. Système d'affichage d'un aéronef, ledit système d'affichage comportant au moins un dispositif d'affichage principal,
**caractérisé en ce qu'**il comporte, de plus, un système d'affichage de secours (2) tel que celui spécifié sous l'une quelconque des revendications 7 à 9.

11. Système d'affichage selon la revendication 10,
**caractérisé en ce que** ledit dispositif d'affichage principal comporte des sources d'informations, et **en ce que** lesdits deux ensembles (3) de sources d'informations desdits deux dispositifs d'affichage de secours (1) dudit système d'affichage de secours (2) sont distincts desdites sources d'informations dudit dispositif d'affichage principal.

## Claims

1. A standby display device of an aircraft, said standby display device (1) comprising:
- a set(3) of information sources;
- an information processing unit (4) capable of processing information originating from said set (3) of information sources; and
- a display means (6) capable of presenting on at least one display screen (8) processed information originating from said information processing unit (4), namely piloting information and at least one navigation information,
**characterized in that** it also comprises a configuration means (9) by which an operator can configure said standby display device (1), according to one of the following three configuration states:
- a first configuration state, for which said display means (6) presents aircraft piloting information on the display screen (8);
- a second configuration state, for which said display means (6) presents navigation information comprising position indications of the aircraft on the display screen (8); and
- a third configuration state, for which said display means (6) presents both piloting information and navigation information comprising position indications on the display screen (8).

2. The device as claimed in claim 1,
**characterized in that** said set (3) of information sources comprises sources which are installed on the aircraft and which supply position indications.

3. The device as claimed in one of claims 1 and 2,
**characterized in that**, when said standby display device (1) is configured in one of said second and third configuration states for presenting navigation information:
- said information processing unit (4) determines the theoretical flight path the aircraft should follow, and the deviation between the effective position of the aircraft and said theoretical flight path; and
- said display means (6) presents said theoretical flight path and said deviation on said display screen (8).

4. The device as claimed in any one of claims 1 to 3,
**characterized in that** it also comprises an input means (13) allowing an operator to enter data in said standby display device (1) **in that**, when said standby display device (1) is configured in one of said second and third configuration states allowing presentation of navigation information:
- said input means (13) is used to enter flight path waypoints; and
- said display means (6) presents on said display screen (8) the flight path waypoints thus entered.

5. The device as claimed in any one of the preceding claims,
**characterized in that** said set (3) of information sources comprises a device capable of supplying information on the horizontal position of the aircraft, and **in that**, when said standby display device (1) is configured in one of said second and third configuration states for presenting navigation information, said display means (6) presents said horizontal position of the aircraft on said display screen (8).

6. The device as claimed in any one of the preceding claims,
**characterized in that**, when said standby display device (1) is configured in one of said second and third configuration states for presenting navigation information:
- said information processing unit (4) determines an indication of direction toward a predetermined geographic waypoint in latitude and in longitude; and
- said display means (6) presents said direction indication on said display screen (8).

7. An aircraft standby display system,
**characterized in that** it comprises at least two standby display devices (1) of the type specified in any one of claims 1 to 6 and **in that** one is programmed to display piloting information and the other is programmed to display navigation information.

8. The system as claimed in claim 7,
**characterized in that** said two standby display devices (1) are identical.

9. The system as claimed in one of claims 7 and 8,
**characterized in that** the two sets (3) of information sources of said standby display devices (1) are part of one and the same information unit (11) and **in that** the two information processing units (4) of said two standby display devices (1) are part of one and the same central unit (12).

10. An aircraft display system, said display system comprising at least one main display device,
**characterized in that** it also comprises a standby display system (2) as specified in any one of claims 7 to 9.

11. The display system as claimed in claim 10,
**characterized in that** said main display device comprises information sources and **in that** said two sets (3) of information sources of said two standby display devices of said standby display system (2) are distinct from said information sources of said main display device.

## Patentansprüche

1. Hilfsanzeigevorrichtung in einem Luftfahrzeug, wobei die Hilfsanzeigevorrichtung (1) Folgendes aufweist:
- eine Informationsquellenanordnung (3);
- eine Informationsverarbeitungseinheit (4), die Informationen verarbeiten kann, die von der Informationsquellenanordnung (3) stammen; und
- ein Anzeigemittel (6), das auf mindestens einem Anzeigebildschirm (8) verarbeitete Informationen darstellen kann, die von der Informationsverarbeitungseinheit (4) stammen, und zwar Steuerungsinformationen und mindestens eine Navigationsinformation,
**dadurch gekennzeichnet, dass** sie ferner ein Konfigurationsmittel (9) aufweist, das einer Bedienperson ermöglicht, die Hilfsanzeigevorrichtung (1) gemäß einem der drei folgenden Konfigurationszustände zu konfigurieren:
- ein erster Konfigurationszustand, für den das Anzeigemittel (6) auf dem Anzeigebildschirm (8) Luftfahrzeugsteuerungsinformationen darstellt;
- ein zweiter Konfigurationszustand, für den das Anzeigemittel (6) auf dem Anzeigebildschirm (8) Navigationsinformationen für das Luftfahrzeug darstellt, die Positionsangaben umfassen; und
- ein dritter Konfigurationszustand, für den das Anzeigemittel (6) auf dem Anzeigebildschirm (8) gleichzeitig Steuerungsinformationen und Navigationsinformationen, die Positionsangaben umfassen, darstellt.

2. Vorrichtung nach Anspruch 1,
**dadurch gekennzeichnet, dass** die Informationsquellenanordnung (3) Quellen aufweist, die am Luftfahrzeug montiert sind und die Positionsangaben liefern.

3. Vorrichtung nach einem der Ansprüche 1 und 2,
**dadurch gekennzeichnet, dass**, wenn die Hilfsanzeigevorrichtung (1) in dem zweiten oder dritten Konfigurationszustand konfiguriert ist, in dem Navigationsinformationen dargestellt werden können:
- die Informationsverarbeitungseinheit (4) die theoretische Strecke, der das Luftfahrzeug folgen soll, sowie die Abweichung zwischen der tatsächlichen Position des Luftfahrzeugs und der theoretischen Strecke bestimmt; und
- das Anzeigemittel (6) auf dem Anzeigebildschirm (8) die theoretische Strecke und die Abweichung darstellt.

4. Vorrichtung nach einem der Ansprüche 1 bis 3,
**dadurch gekennzeichnet, dass** sie ferner ein Eingabemittel (13) aufweist, das einer Bedienperson die Eingabe von Daten in die Hilfsanzeigevorrichtung (1) ermöglicht, und dadurch, dass, wenn die Hilfsanzeigevorrichtung (1) in dem zweiten oder dritten Konfigurationszustand konfiguriert ist, in dem Navigationsinformationen dargestellt werden können:
- das Eingabemittel (13) die Eingabe von Streckenpunkten ermöglicht; und
- das Anzeigemittel (6) auf dem Anzeigebildschirm (8) die so eingegebenen Streckenpunkte darstellt.

5. Vorrichtung nach einem der vorhergehenden Ansprüche,
**dadurch gekennzeichnet, dass** die Informationsquellenanordnung (3) eine Vorrichtung aufweist, die geeignet ist, eine Information zur horizontalen Position des Luftfahrzeugs zu liefern, und dadurch, dass, wenn die Hilfsanzeigevorrichtung (1) in dem zweiten oder dritten Konfigurationszustand konfiguriert ist, in dem Navigationsinformationen dargestellt werden können, das Anzeigemittel (6) auf dem Anzeigebildschirm (8) die horizontale Position des Luftfahrzeugs darstellt.

6. Vorrichtung nach einem der vorhergehenden Ansprüche,
**dadurch gekennzeichnet, dass**, wenn die Hilfsanzeigevorrichtung (1) in dem zweiten oder dritten Konfigurationszustand konfiguriert ist, in dem Navigationsinformationen dargestellt werden können:
- die Informationsverarbeitungseinheit (4) eine Richtungsangabe in Richtung auf einen festgelegten geographischen Punkt in Breitengrad und in Längengrad bestimmt; und
- das Anzeigemittel (6) auf dem Anzeigebildschirm (8) die Richtungsangabe darstellt.

7. Hilfsanzeigesystem eines Luftfahrzeugs,
**dadurch gekennzeichnet, dass** es mindestens zwei Hilfsanzeigevorrichtungen (1) der Art aufweist, die in einem der Ansprüche 1 bis 6 aufgeführt ist, und dadurch, dass eine parametrisiert ist, Steuerungsinformationen anzuzeigen und die andere parametrisiert ist, Navigationsinformationen anzuzeigen.

8. System nach Anspruch 7,
**dadurch gekennzeichnet, dass** die beiden Hilfsanzeigevorrichtungen (1) identisch sind.

9. System nach einem der Ansprüche 7 und 8,
**dadurch gekennzeichnet, dass** die beiden Informationsquellenanordnungen (3) der beiden Hilfsanzeigevorrichtungen (1) zu ein und derselben Informationseinheit (11) gehören und dadurch, dass die beiden Informationsverarbeitungseinheiten (4) der beiden Hilfsanzeigevorrichtungen (1) zu ein und derselben Zentraleinheit (12) gehören.

10. Anzeigesystem eines Luftfahrzeugs, wobei das Anzeigesystem mindestens eine Hauptanzeigevorrichtung aufweist,
**dadurch gekennzeichnet, dass** es ferner ein Hilfsanzeigesystem (2) wie das aufweist, das in einem der Ansprüche 7 bis 9 aufgeführt ist.

11. Anzeigesystem nach Anspruch 10,
**dadurch gekennzeichnet, dass** die Hauptanzeigevorrichtung Informationsquellen aufweist und dadurch, dass sich die beiden Informationsquellenanordnungen (3) der beiden Hilfsanzeigevorrichtungen (1) des Hilfsanzeigesystems (2) von den Informationsquellen der Hauptanzeigevorrichtung unterscheiden.
